# EUROPÄISCHE PATENTSCHRIFT

(11) **EP 1 597 488 B1**
(45) Veröffentlichungstag und Bekanntmachung des Hinweises auf die Patenterteilung: **14.06.2006**
(21) Anmeldenummer: 04708329.0
(22) Anmeldetag: 05.02.2004
(51) Int. Cl.: F16C 29/04

(54) **Linearwälzlager mit Sensor zur Ermittlung von Verschiebewiderstand**
Linear roller bearing provided with a sensor for determining displacement resistance
Roulement linéaire équipe d'un capteur permettant de déterminer la résistance au déplacement

(30) Priorität: 25.02.2003 DE 10307882
(43) Veröffentlichungstag der Anmeldung: 23.11.2005
(73) Patentinhaber: Schaeffler KG, 91074 Herzogenaurach (DE)
(72) Erfinder: RUDY, Dietmar, 66501 Kleinbundenbach (DE); LUTZ, Peter, 66877 Miesenbach (DE); MENGES, Martin, 66424 Homburg (DE)
(86) Internationale Anmeldenummer: PCT/EP2004/001039
(87) Internationale Veröffentlichungsnummer: WO 2004/076875

(56) Entgegenhaltungen:
- DE-A- 19 647 939
- DE-A- 19 941 587
- DE-C- 4 395 740

## Beschreibung

Die vorliegende Erfindung betrifft Linearwälzlager. Derartige Linearwälzlager werden beispielsweise im Werkzeugmaschinen, aber auch in Bestückungsmaschinen oder allgemein in Fertigungsstraßen eingesetzt. Maschinenteile können auf diese Art und Weise in Längsrichtung einwandfrei und hochgenau geführt werden.

Aus EP-0558761 B1 beispielsweise ist ein Linearwälzlager mit einem an einer Führungsschiene über Kugeln wälzgelagerter Führungswagen bekannt geworden, der mit mehreren endlosen Kugelkanälen für die Kugeln versehen ist. Jeder Kugelkanal umfasst einen Tragkanal für tragende Kugeln, wobei diese Kugeln an Laufbahnen der Führungsschiene und des Führungswagens abwälzen. Jeder Kugelkanal umfasst ferner einen Rücklaufkanal, in dem die Kugeln lastfrei zurücklaufen. Ferner umfasst der Kugelkanal zwei den Tragkanal mit dem Rücklaufkanal endlos verbindende Umlenkkanäle. Diese Umlenkkanäle sind an Endgliedern des Führungswagen ausgebildet. Wenn man die in Umfangsrichtung hintereinander angeordneten Kugeln als endlose Kugelkette bezeichnet, unterliegt diese Kugelkette einem Verschiebewiderstand in Umlaufrichtung. Dieser Verschiebewiderstand ist zurückzuführen auf Reibung zwischen zueinander bewegten Teilen, oder durch Schmiermittel, dass zur Schmierung der Kugelkette im Kugelkanal vorgesehen ist, oder durch Verschmutzung des Kugelkanals.

Oftmals sind derartige Linearwälzlager - seien es nun solche mit Kugeln oder solche mit Rollen - in einer Umgebung eingesetzt, in der beispielsweise Schmutz an die Führungsschiene somit auch an den Führungswagen gelangt. Um zu vermeiden, dass Schmutz in den Wälzkörperkanal gelangt sind Linearwälzlager vorgeschlagen worden, bei denen Dichtungen und Abstreifer eingesetzt werden, die den Schmutz vom Führungswagen fernhalten sollen. Es ist festgestellt worden, dass derartige Abstreifer und Dichtungen leicht beschädigt werden und deshalb ihre Funktion nicht einwandfrei erfüllen können. Oftmals sind derartige Linearwälzlager an Stellen eingebaut die von außen nur noch schwer zugänglich sind, jedenfalls schwer oder gar nicht einsehbar sind. Schäden an den Linearwälzlagern werden daher nicht sofort bemerkt. Derartige Schäden können durch unerwünschten Schmutzeintrag oder aber auch durch Mangelschmierung hervorgerufen werden. Bei Pittingbildung oder Schmutzeintrag gelangen Partikel in den Wälzkörperumlauf, wodurch der Verschiebewiderstand der Wälzkörperkette erhöht ist.

Für den Fall der Mangelschmierung ist aus DE 19647939 A1 ein Linearlagerelement bekannt geworden bei dem eine Nachschmiereinrichtung vorgesehen ist, um Schmierstoff in den Wälzkörperkanal bei Bedarf einzubringen. Zur Überwachung der Nachschmierung können Sensoren (Druckgeber, Flüssigkeitsmelder, Näherungsschalter oder ähnliches) angeordnet werden. Pittingbildung oder unerwünschter Schmutzeintrag wird aber bei derartigen Linearlagerelementen nicht überwacht.

Aufgabe der vorliegenden Erfindung ist es, ein Linearwälzlager nach den Merkmalen des Oberbegriffs des Anspruchs 1 anzugeben, bei dem Verschlechterungen der Laufeigenschaften einwandfrei festgestellt werden können.

Erfindungsgemäß wird diese Aufgabe dadurch gelöst, dass die Endglieder jeweils mit einem Sensor versehen sind, dessen vorzugsweise elektrisches Signal abhängig ist von dem Verschiebewiderstand. Es wurde festgestellt, dass unter dem Verschiebewiderstand eine Kraft auf das Endglied wirkt. Im Endglied ist der Umlenkkanal angeordnet. Wenn die Wälzkörperkette in Umlaufrichtung nur noch unter einem erhöhten Verschiebewiderstand zu bewegen ist, wirkt eine Kraft in Umlaufrichtung, die im Bereich des Umlenkkanals mit einer Komponente axial gegen das Endglied drückt. Das Endglied kann sich unter dieser Kraft verformen, also ist eine Verformung am Endglied feststellbar. Sowohl eine Verformung des Endgliedes, als auch eine auf das Endglied wirkende Kraftkomponente als Folge des erhöhten Verschiebewiderstandes können als physikalische Größen von dem Sensor erfasst und beispielsweise in ein elektrisches Signal umgewandelt werden. Der Sensor gibt also ein Signal ab, aus dem auf den Wert der physikalischen Größe und schließlich auf den Verschiebewiderstand geschlossen werden kann.

Bekannterweise können derartige Sensoren an einer Auswerteeinheit angeschlossen sein, die beispielsweise ein akustisches Alarmsignal auslösen kann. Wartungspersonal ist demzufolge rechtzeitig vor einem Totalausfall des Linearwälzlagers über dessen verschlechterte Laufeigenschaften informiert. In Stillstandszeiten, also beispielsweise an Wochenenden können dann derartige defekte Linearwälzlager gegen einwandfreie Linearwälzlager ausgetauscht werden. Ein Produktionsstillstand kann mit der Erfindung verhindert werden. Bei den bekannten Linearwälzlagern ist nicht auszuschließen, dass infolge eines sehr hohen Verschiebewiderstandes die auf das Endglied einwirkenden Kräfte dazu führen, dass das vorzugsweise aus Kunststoff im Spritzverfahren hergestellte Endglied zerstört wird und Kugeln aus dem Linearwälzlager rausfallen. Mit derart beschädigten Linearwälzlagern bestückte Maschinen sind nicht mehr funktionsfähig.

Wenn der Verschiebewiderstand erhöht ist, und ein beispielsweise akkustisches Signal diese Erhöhung des Verschiebewiderstandes meldet, mag es auch genügen, einen Spülvorgang einzuleiten, mit dem beispielsweise unerwünschte Verschmutzungen im Wälzkörperkanal herausgespült werden. Schmierstoff kann über geeignete Zuführungseinrichtungen in das Linearwälzlager eingebracht werden. Wenn derartige Alarmsignale wiederholt auftreten, mag es angezeigt sein, diese Lager gegen einwandfreie Lager auszutauschen.

Alle Sensortypen sind geeignet, die physikalische Größen erfassen können, die einen Rückschluss auf den Verschiebewiderstand im Wälzkörperkanal ermöglichen. Es können Sensoren zum Einsatz kommen, die eine Verformung oder auch eine Kraft messen. Nachstehend sind besondere Ausgestaltungen beschrieben.

Als Sensorfolie ausgebildete Sensoren eignen sich in besondererweise für den Einsatz bei erfindungsgemäßen Linearwälzlagern. Denn diese Folien sind sehr dünn und von ihren Abmessung her sehr klein, und können problemlos beispielsweise auf Stirnflächen des Endgliedes aufgebracht werden. Derartige Sensorfolien haben in der Regel Anschlussdrähte, die mit einer Auswerteeinheit verbunden werden können. Diese Auswerteeinheiten können ebenfalls in das Endglied integriert werden.

Der Sensor kann auch als Sensorschalter ausgebildet werden, der ein Schaltsignal auslöst wenn der Verschiebewiderstand einen Grenzwert überschreitet . Der Grenzwert kann in Feldversuchen festgelegt werden. Es mag ausreichend sein, wenn lediglich eine Meldung bei Überschreiten dieses Grenzwertes erfolgt. Unterhalb dieses Grenzwertes ist die einwandfreie Funktion des erfindungsgemäßen Linearwälzlagers noch gegeben.

Üblicherweise ist das Endglied durch ein Kopfstück gebildet, das über Befestigungsmittel, insbesondere Schrauben, mit einem Tragkörper des Führungswagen verbunden ist, wobei erfindungsgemäß der Sensor zwischen dem Befestigungsmittel und dem Kopfstück wirksam angeordnet ist. Wenn das Kopfstück unter oder Kraft des erhöhten Verschiebewiderstands axial weg von dem Tragkörper gedrückt wird, wird dieser erhöhte Druck auf den Sensor übertragen, der an dem Befestigungsmittel abgestützt ist. Eine praktische Lösung sieht vor, dass ein Schraubenschaft der Schraube durch eine Durchgangsöffnung des Kopfstückes hindurchgeführt ist, wobei ein Schraubenkopf der Schraube auf einer Schulter des Kopfstückes abgestützt ist, und wobei zwischen dem Schraubenkopf und der Schulter der Sensor angeordnet ist. Der Sensor wird also verstärkt auf Druck beansprucht, wenn der Verschiebewiderstand im Wälzkörperkanal erhöht ist.

Wenn das Kopfstück mittels Schrauben an dem Tragkörper des Führungswagen festgeschraubt ist, kann der Sensor zwischen dem Tragkörper und dem Kopfstück wirksam angeordnet sein. Unter der Vorspannkraft der Schrauben ist der Sensor zwischen dem Tragkörper und dem Kopfstück auf Druck vorgespannt. Wenn der Verschiebewiderstand im Wälzkörperkanal erhöht ist, wird das Kopfstück unter der axial wirkenden Kraft des Verschiebewiderstand es weg vom Tragkörper gedrückt. Diese Kraft ist also der Vorspannkraft der Schrauben entgegengesetzt. Demzufolge ist die auf den Sensor wirkende Druckspannung reduziert. Diese Änderung der Druckspannung kann von dem Sensor erfasst und weitergegeben werden, wobei beispielsweise bei Unterschreiten eines Grenzwertes ein Alarmsignal ausgelöst werden kann.

In praktischer Ausgestaltung dieser zuletzt beschriebenen erfindungsgemäßen Weiterbildung kann der Schraubenschaft der Schraube durch die Durchgangsöffnung des Kopfstückes hindurchgeführt sein, wobei ein Schraubenkopf der Schraube auf einer Schulter des Kopfstückes abgestützt ist, und wobei zwischen dem Kopfstück und dem Tragkörper der Sensor angeordnet ist.

Der Sensor kann ringförmig als Ringsensor ausgebildet sein. Hier können Kraftsensoren (z. B. Piezzosensoren, Leitplastik oder DMS-Sensoren) zum Einsatz kommen.

Die Kopfstücke haben üblicherweise eine U-förmige Ausbildung, wobei die beiden die Führungsschiene umgreifenden Schenkel des Kopfstückes unter der Last des Verschiebewiderstandes aufgebogen werden. Diese Biegung kann über die Sensoren erfasst werden. Demzufolge können die Sensoren vorzugsweise an den Schenkeln befestigt sein.

Die üblicherweise aus Kunststoff im Spritzverfahren hergestellten Kopfstücke ermöglichen auch eine erfindungsgemäße Weiterbildung, bei der der Sensor in den Kunststoff eingebettet ist. Beispielsweise kann der Sensor bereits im Spritzwerkzeug eingelegt werden. Besondere Maßnahmen zur Befestigung des Sensors entfallen. Außerdem ist der im Kunststoff eingebettete Kunststoff von unerwünschter äußerer Einwirkung ferngehalten.

Weiter oben wurde bereits erwähnt, dass das Signal des Sensors an eine Auswerteeinheit weitergegeben werden kann. Die Verbindung zwischen dem Sensor und der Auswerteeinheit kann über eine Verdrahtung, aber auch drahtlos beispielsweise über eine Funkverbindung gewährleistet sein. Die Auswerteeinheit kann aber auch in das Kopfstück integriert sein.

Nachstehend wird die Erfindung anhand von drei in insgesamt sieben Figuren dargestellten Ausführungsbeispielen näher erläutert. Es zeigen
- Figur 1: eine perspektivische Darstellung eines erfindungsgemäßen Linearwälzlagers
- Figur 2: einen Teilschnitt durch das erfindungsgemäße Linearwälzlager aus Figur 1,
- Figur 3: alternative Ausführungsformen einer Einzelheit des erfindungsgemäßen Linearwälzlagers aus Figur 1
- Figur 4: das erfindungsgemäße Linearwälzlager aus Figur 1 in Explosionsdarstellung
- Figur 5: ein modifiziertes Kopfstück des erfindungsgemäßen Linearwälzlagers nach Figur 1
- Figur 6: in vereinfachter Darstellung ein erfindungsgemäßes Linearwälzlager mit modifizierter Sensoranordnung
- Figur 7: ein Kopfstück wie in Figur 5, jedoch mit modifizierten Sensoren, und ohne integrierte Auswerteeinheit

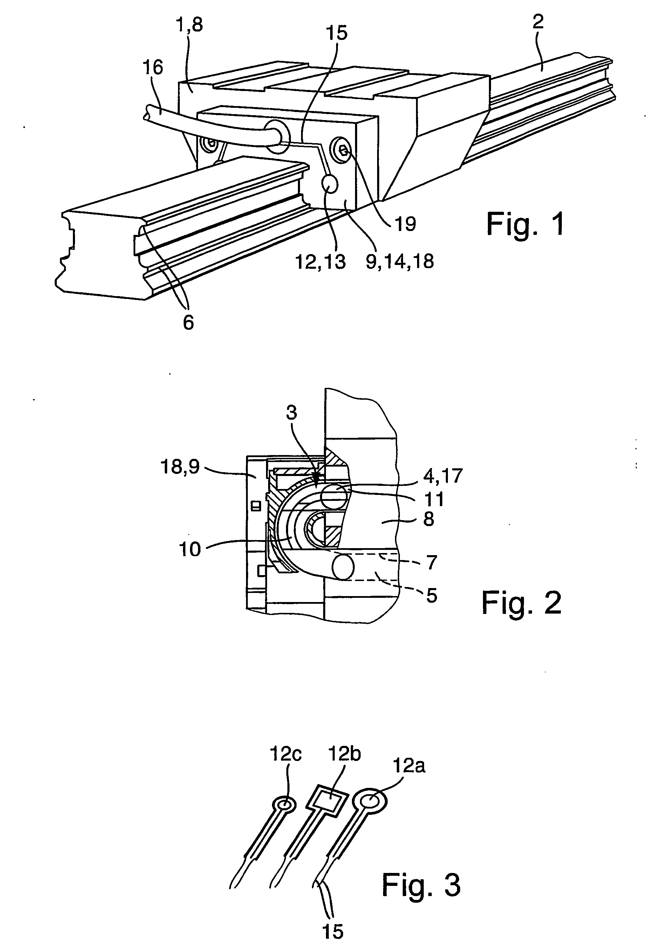

Das in den Figuren 1-4 abgebildete Linearwälzlager weist einen Führungswagen 1 auf, der auf einer Führungsschiene 2 wälzgelagert ist. Der Führungswagen 1 umfasst zu beiden Längsseiten der Führungsschiene 2 je zwei endlose Wälzkörperkanäle 3 für Wälzkörper 4, von denen einer in Figur 2 angedeutet ist. Jeder Wälzkörperkanal 3 umfasst einen Tragkanal 5 für tragende Wälzkörper 4. Im Tragkanal 5 wälzen die Wälzkörper 4 an Laufbahnen 6,7, wobei die einen Laufbahnen 6 an der Führungsschiene 2 und die anderen Laufbahnen 7 am Tragkörper 8 des Führungswagens 1 ausgebildet sind.

Zu beiden Stirnseiten des Tragkörpers 8 ist je ein Endglied 9 angeordnet, an dem ein Umlenkkanal 10 ausgebildet ist. Der Wälzkörperkanal 3 umfasst ferner einen Rücklaufkanal 11, der an dem Tragkörper 8 ausgebildet ist. Die beiden Umlenkkanäle 10 verbinden die Tragkanäle 5 mit den Rücklaufkanälen 11 zu dem endlosen Wälzkörperkanal 3, in dem die Wälzkörper 4 endlos umlaufen.

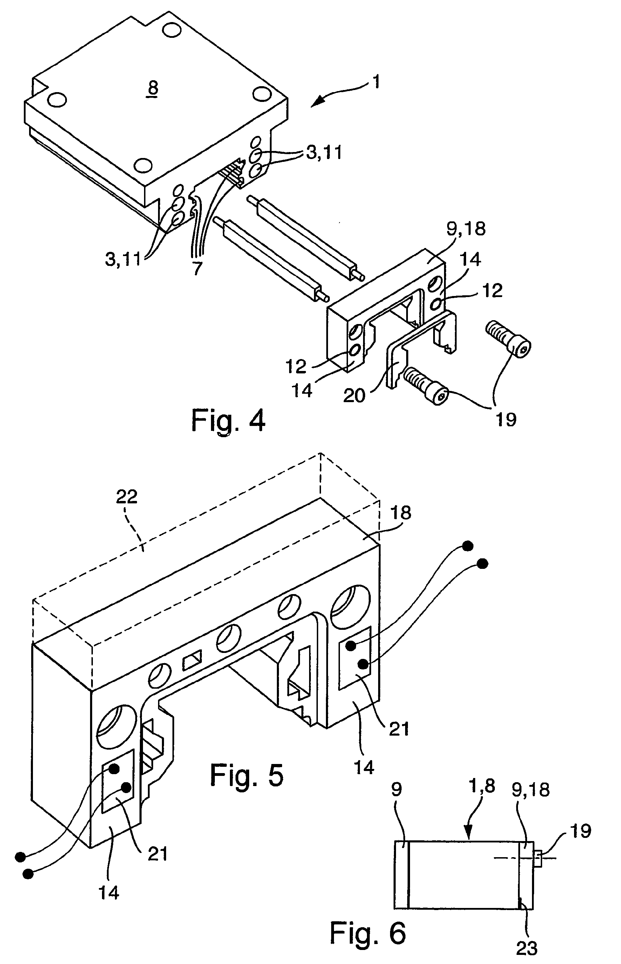

Die Endglieder 9 sind jeweils mit einem Sensor 12 versehen, der als Sensorfolie 13 ausgebildet ist. Figur 3 zeigt unterschiedliche körperliche Ausgestaltungen 12 a, 12 b, 12 c des Sensors 12.

Der Figur 1 ist zu entnehmen, dass jeweils ein Sensor 12 an jedem Schenkel 14 des U-förmigen Endgliedes 9 an dessen äußerer Stirnseite angebracht ist. ' Anschlussdrähte 15 enden in einem Übertragungskabel 16, dass an eine nicht abgebildete Auswerteeinheit angeschlossen ist.

Die in dem endlosen Wälzkörperkanal 3 angeordneten Wälzkörper 4 bilden eine Kette, die nachfolgend als Wälzkörperkette 17 bezeichnet wird. Wenn diese Wälzkörperkette 17 in Umlaufrichtung in dem Wälzkörperkanal 3 umwälzt, überwindet sie einen Verschiebewiderstand. Dieser Verschiebewiderstand kann durch mehrere Parameter beeinflusst werden. Zum einen dämpft der im Wälzkörperkanal 3 vorgesehene Schmierstoff die Umlaufbewegung der Wälzkörperkette 17. Zum anderen ist nicht auszuschließen, dass Schmutzpartikel oder andere unerwünschte Fremdstoffe in den Wälzkörperkanal 3 gelangen. Aufgrund dieses Schmutzeintrages kann der Verschiebewiderstand weiter erhöht werden. Dieser Verschiebewiderstand äußert sich im Tragkanal 5 und im Rücklaufkanal 11 als axiale Kraft, die entlang der Wälzkörperkette 17 übertragen wird. Im Umlenkbereich wirkt dieser axiale Verschiebekraft auch in axialer Richtung auf das Endglied 9.

Das Endglied 9 ist vorliegend durch ein aus Kunststoff im Spritzverfahren hergestelltes Kopfstück 18 gebildet, wobei die Sensoren 12 in den Kunststoff eingebettet sind.

Den Figuren 1 und 4 kann entnommen werden, dass das Kopfstück 18 mittels Schrauben 19 an dem Tragkörper 8 des Führungswagens 1 lösbar befestigt ist.

Unter der Wirkung des Verschiebewiderstands werden die Schenkel 14 des U-förmigen Kopfstücks 18 auf Biegung beansprucht, wodurch die Schenkel 14 weg von dem Tragkörper 8 gebogen werden. Die unter dieser Biegung einsetzende Verformung kann von den Sensoren 12 erfasst und auf elektrischem Wege an die nicht dargestellte Auswerteeinheit weitergegeben werden. Erreicht diese Verformung der Schenkel 14 einen kritischen Wert, kann die Auswerteeinheit beispielsweise einen Alarm auslösen, der dem Wartungspersonal anzeigt, dass der Verschiebewiderstand im Wälzlager unzulässig erhöht und Abhilfe zu leisten ist.

Der Figur 4 ist zu entnehmen dass an der äußeren Stirnseite des Kopfstückes 8 ein Abstreifer 20 angeordnet ist, dessen Aufgabe es ist, Fremdpartikel von der Führungsschiene 2 abzustreifen, damit Schmutzeintrag in den Wälzkörperkanal 3 vermieden ist.

Figur 5 zeigt das Kopfstück 18 mit modifizierten Sensoren, die hier als Sensorschalter 21 ausgebildet sind. Dieser Sensorschalter 21 reagieren ebenso wie die zuvor beschriebenen auf die Verformung der Schenkel 14 des Kopfstücks 18, wobei hier jedoch ein Schaltsignal bei einer kritischen Verbiegung weitergeleitet wird.

Eine hier nur gestrichelte dargestellte Auswerteeinheit 22 ist in das Kopfstück 18 integriert. Die Sensorschalter 21 sind an die Außenwerteeineheit 22 elektrisch angeschlossen. Die hier dargestellten Sensorschalter 21 können selbstverständlich durch andere geeignete Sensortypen ersetzt und an die Auswerteeinheit 22 angeschlossen werden.

Figur 6 zeigt in vereinfachter Darstellung ein erfindungsgemäßes Linearwälzlager, jedoch mit einem modifizierten Sensoranordnung. Ein Sensor 23 ist hier zwischen dem als Kopfstück 18 ausgebildeten Endglied 9 und dem Tragkörper 8 des Führungswagens 1 angeordnet. In diesem Fall ist der Sensor 23 ein Kraftsensor, der unter der Vorspannkraft der Schrauben 19 auf Druck belastet ist. Unter dem weiter oben erörterten Verschiebewiderstand wirkt die axiale Kraft auf das Kopfstück 18, das weg von dem Tragkörper 8 gedrückt wird. Das bedeutet, dass die auf den Sensor 23 wirkende Druckbeanspruchung umso mehr reduziert wird, je höher der Verschiebewiderstand ist. Das bedeutet, dass bei dieser Anordnung über den Sensor 23 einwandfrei auf den Verschiebewiderstand geschlossen werden kann. Ebenso wie in anderen Ausführungsbeispielen ist der Sensor 23 an eine Auswerteeinheit angeschlossen, um beispielsweise ein Alarmsignal bei Erreichen eines kritischen Verschiebewiderstandes auszulösen.

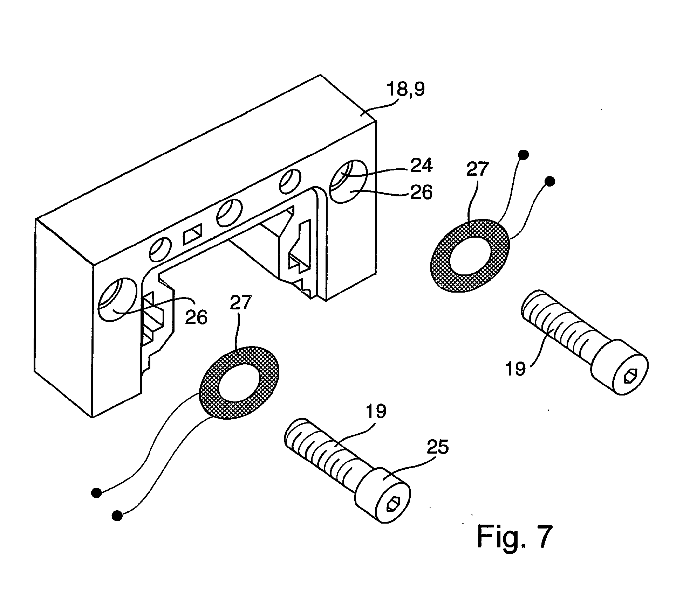

Figur 7 zeigt das Kopfstück 18 des erfindungsgemäßen Linearwälzlagers mit einer modifizierten Sensoranordnung. Der Figur ist zu entnehmen, dass das Kopfstück 18 Durchgangsbohrungen 24 für die Schrauben 19 aufweist. Der Schraubenschaft wird durch die Durchgangsbohrung 24 hindurchgeführt, wobei der Schraubenkopf 25 auf einer Schulter 26 des Kopfstücks 18 abgestützt ist, und wobei zwischen dem Schraubenkopf 25 und der Schulter 26 ein auf dem Schraubenschaft angeordneter ringförmiger Sensor 27 angeordnet ist. Dadurch, dass der Sensor 27 in dem Kopfstück 18 versenkt angeordnet und durch den Schraubenkopf 25 abgedeckt ist, ist eine Beschädigung des Ringsensors 27 von außen ausgeschlossen. Der Ringsensor 27 ist hier ein Kraftsensor, der beispielsweise durch Piezzosensoren, Leitplastik oder DMS-Sensoren gebildet sein kann. Nach dem Anziehen der Schrauben 19 wirkt auf den Ringsensor 27 eine bekannte Vorspannung unter der Spannkraft der Schrauben 19. Unter dem Einfluss des Verschiebewiderstandes drückt das Kopfstück 18 in Richtung auf den Schraubenkopf 25 der Schraube 19. Das bedeutet, dass eine auf den Ringsensor 27 wirkende Druckkraft zunimmt. Der Ringsensor kann auf diese Zunahme der Druckkraft reagieren und gegebenenfalls ein Alarmsignal über die angeschlossene Auswerteeinheit auslösen.

Mit der Sensorüberwachung ist die Betriebssicherheit der erfindungsgemäßen Linearwälzlager erhöht. Vor dem Totalausfall kann ein Alarmsignal ausgelöst werden. Das Linearwälzlager kann nachgeschmiert werden. Durch das Nachschmieren können die Schmutzpartikel aus dem Wälzkörperkanal herausgespült und Mangelschmierung beseitigt werden. Sollte wiederholt Alarm ausgelöst werden, kann ein Wartungsstopp außerhalb der Produktionszeit geplant werden. Mit dem erfindungsgemäßen Linearwälzlager können demzufolge überraschende Produktionsausfälle vermieden werden, die durch einen Versagensfall ausgelöst werden.

Für die vorliegende Erfindung sind alle Sensoren geeignet, mit denen sich in Abhängigkeit von einer physikalischen oder geometrischen Größe ein in der Regel elektrisches Signal erzeugen erlässt. Derartige Sensoren reagieren auf diese physikalische Größe und geben meist ein elektrisches Signal ab, aus dem auf den Wert der physikalischen Größe geschlossen werden kann. In den vorangegangenen Ausführungsbeispielen wurde ausgeführt, das die auf das Endglied wirkende Kraft bzw. dessen Verformung als physikalische Größe erfasst werden kann. Der Zusammenhang zwischen dieser Kraft oder der Verformung und dem im Wälzkörperkanal wirkenden Verschiebewiderstand kann in Versuchsreihen ermittelt werden. Aufgrund dieses bekannten Zusammenhanges können die Sensoren einwandfrei kalibriert werden, so dass von dem Sensor weitergegebene Signale einwandfrei Rückschluss geben auf den wirksamen Verschiebewiderstand.

### Bezugszahlen

- 1.: Führungswagen
- 2.: Führungsschiene
- 3.: Wälzkörperkanal
- 4.: Wälzkörper
- 5.: Tragkanal
- 6.: Laufbahn
- 7.: Laufbahn
- 8.: Tragkörper
- 9.: Endglied
- 10.: Umlenkkanal
- 11.: Rücklaufkanal
- 12.: Sensor
- 13.: Sensorfolie
- 14.: Schenkel
- 15.: Anschlussdraht
- 16.: Übertragungskabel
- 17.: Wälzkörperkette
- 18.: Kopfstück
- 19.: Schraube
- 20.: Abstreifer
- 21.: Sensorschalter
- 22.: Auswerteeinheit
- 23.: Sensor
- 24.: Durchgangsbohrung
- 25.: Schraubenkopf
- 26.: Schulter
- 27.: Ringsensor

## Patentansprüche

1. Linearwälzlager mit einem an einer Führungsschiene (2) über Wälzkörper (4) wälzlagerbaren Führungswagen (1), der mit wenigstens einem endlosen Wälzkörperkanal (3) für die Wälzkörper (4) versehen ist, welcher Wälzkörperkanal (3) einen Tragkanal (5) für tragende Wälzkörper (4), einen Rücklaufkanal (11) für rücklaufende Wälzkörper (4), und den Tragkanal (5) mit dem Rücklaufkanal (11) verbindende Umlenkkanäle (10) auf weist, wobei die Umlenkanäle (10) an Endgliedern (9) des Führungswagens (1) vorgesehen sind, und wobei die Wälzkörper (4) im Wälzkörperkanal (3) einen Verschiebewiderstand in Umlaufrichtung erfahren, **dadurch gekennzeichnet, daß** die Endglieder (9) jeweils mit einem Sensor (12) versehen sind, dessen vorzugsweise elektrisches Signal abhängig ist von dem Verschiebewiderstand.

2. Linearwälzlager nach Anspruch 1, bei dem der Sensor (12) eine Verformung des Endgliedes (9) erfaßt.

3. Linearwälzlager nach Anspruch 1, bei dem der Sensor (12) einen auf das Endglied (9) einwirkenden Druck oder Kraft erfaßt.

4. Linearwälzlager nach Anspruch 1, bei dem der Sensor als Sensorfolie (13) ausgebildet ist.

5. Linearwälzalager nach Anspruch 1, bei dem der Sensor als Sensorschalter (21) ausgebildet ist, der ein Schaltsignal auslöst, wenn der Verschiebewiderstand einen Grenzwert überschreitet.

6. Linearwälzlager nach Anspruch 1, bei dem das Endglied (9) durch ein Kopfstück (18) gebildet ist, daß über Befestigungsmittel, insbesondere Schrauben (19), mit einem Tragkörper (8) des Führungswagens (1) verbunden ist, wobei der Sensor (27) zwischen dem Befestigungsmittel und dem Kopfstück (18) wirksam angeordnet ist.

7. Linearwälzlager nach Anspruch 6, bei dem ein Schraubenschaft der Schraube (19) durch eine Durchgangsöffnung des Kopfstückes (18) hindurchgeführt ist, wobei ein Schraubenkopf (25) der Schraube (19) auf einer Schulter (26) des Kopfstückes (18) abgestützt ist, und wobei zwischen dem Schraubenkopf (25) und der Schulter (26) der Sensor (27) angeordnet ist.

8. Linearwälzlager nach Anspruch 1, bei dem das Endglied (9) durch ein Kopfstück (18) gebildet ist, daß über Befestigungsmittel, insbesondere Schrauben (19), mit einem Tragkörper (8) des Führungswagens (1) verbunden ist, wobei der Sensor (23) zwischen dem Tragkörper (8) und dem Kopfstück (18) wirksam angeordnet ist.

9. Linearwälzlager nach Anspruch 8, bei dem ein Schraubenschaft der Schraube (19) durch eine Durchgangsöffnung des Kopfstückes (18) hindurchgeführt ist, wobei ein Schraubenkopf (25) der Schraube (19) auf einer Schulter (26) des Kopfstückes (18) abgestützt ist, und wobei zwischen dem Kopfstück (18) und dem Tragkörper (8) der Sensor (23) angeordnet ist.

10. Linearwälzlager nach Anspruch 1, bei dem der Sensor (12) in ein das Endglied (9) bildendes Kopfstück (18) integriert ist.

11. Linearwälzlager nach Anspruch 10, bei dem das Kopfstück (18) aus Kunststoff insbesondere im Spritzverfahren hergestellt ist, wobei der Sensor (12) in den Kunststoff eingebettet ist.

12. Linearwälzlager nach Anspruch 1, bei dem das Signal des Sensors (12, 13, 21, 23, 27) an eine Auswerteeinheit (22) weitergegeben wird.

13. Linearwälzlager nach Anspruch 12, bei dem eine Verdrahtung zwischen dem Sensor (12, 13) und der Auswerteeinheit (22) vorgesehen ist.

14. Linearwälzlager nach Anspruch 12, bei dem das Signal des Sensors (12) drahtlos, bspw. über Funk an die Auswerteeinheit weitergegeben wird.

15. Linearwälzlager nach Anspruch 12, bei dem die Auswerteeinheit (22) in das Kopfstück (18) integriert ist.

## Claims

1. Linear roller bearing having a guide carriage (1) which can be roller-mounted on a guide rail (2) via rolling bodies (4) and is provided with at least one endless rolling-body channel (3) for the rolling bodies (4), which rolling-body channel (3) has a loadbearing channel (5) for loadbearing rolling bodies (4), a return channel (11) for returning rolling bodies (4) and deflection channels (10) which connect the loadbearing channel (5) to the return channel (11), the deflection channels (10) being provided on end elements (9) of the guide carriage (1), and the rolling bodies (4) experiencing a resistance to displacement in the rolling-body channel (3) in the direction of circulation, **characterized in that** the end elements (9) are provided in each case with a sensor (12), the preferably electrical signal of which is dependent on the resistance to displacement.

2. Linear roller bearing according to Claim 1, in which the sensor (12) detects a deformation of the end element (9).

3. Linear roller bearing according to Claim 1, in which the sensor (12) detects a pressure or force which acts on the end element (9).

4. Linear roller bearing according to Claim 1, in which the sensor is configured as a sensor film (13).

5. Linear roller bearing according to Claim 1, in which the sensor is configured as a sensor switch (21) which triggers a switching signal if the resistance to displacement exceeds a limiting value.

6. Linear roller bearing according to Claim 1, in which the end element (9) is formed by a head piece (18) which is connected to a loadbearing body (8) of the guide carriage (1) via fastening means, in particular screws (19), the sensor (27) being arranged so as to be active between the fastening means and the head piece (18).

7. Linear roller bearing according to Claim 6, in which a screw shaft of the screw (19) is guided through a passage opening of the head piece (18), a screw head (25) of the screw (19) being supported on a shoulder (26) of the head piece (18), and the sensor (27) being arranged between the screw head (25) and the shoulder (26).

8. Linear roller bearing according to Claim 1, in which the end element (9) is formed by a head piece (18) which is connected to a loadbearing body (8) of the guide carriage (1) via fastening means, in particular screws (19), the sensor (27) being arranged so as to be active between the loadbearing body (8) and the head piece (18).

9. Linear roller bearing according to Claim 8, in which a screw shaft of the screw (19) is guided through a passage opening of the head piece (18), a screw head (25) of the screw (19) being supported on a shoulder (26) of the head piece (18), and the sensor (27) being arranged between the head piece (18) and the loadbearing body (8).

10. Linear roller bearing according to Claim 1, in which the sensor (12) is integrated into a head piece (18) which forms the end element (9).

11. Linear roller bearing according to Claim 10, in which the head piece (18) is manufactured from plastic, in particular using the injection-moulding process, the sensor (12) being embedded into the plastic.

12. Linear roller bearing according to Claim 1, in which the signal of the sensor (12, 13, 21, 23, 27) is forwarded to an evaluation unit (22).

13. Linear roller bearing according to Claim 12, in which wiring is provided between the sensor (12, 13) and the evaluation unit (22).

14. Linear roller bearing according to Claim 12, in which the signal of the sensor (12) is forwarded to the evaluation unit wirelessly, for example via radio.

15. Linear roller bearing according to Claim 12, in which the evaluation unit (22) is integrated into the head piece (18).

## Revendications

1. Roulement linéaire avec un chariot de guidage (1) pouvant rouler par des corps de roulement (4) sur un rail de guidage (2), qui est pourvu d'au moins un canal sans fin à corps de roulement (3) pour les corps de roulement (4), canal à corps de roulement (3) qui présente un canal de support (5) pour des corps de roulement porteurs (4), un canal de retour (11) pour le retour des corps de roulement (4), et des canaux de déviation (10) reliant le canal de support (5) au canal de retour (11), dans lequel les canaux de déviation (10) sont prévus sur des organes d'extrémité (9) du chariot de guidage (1), et dans lequel les corps de roulement (4) subissent une résistance au déplacement en direction de circulation dans le canal à corps de roulement (3), **caractérisé en ce que** les organes d'extrémité (9) sont chacun pourvus d'un capteur (12), dont le signal de préférence électrique dépend de la résistance au déplacement.

2. Roulement linéaire selon la revendication 1, dans lequel le capteur (12) détecte une déformation de l'organe d'extrémité (9).

3. Roulement linéaire selon la revendication 1, dans lequel le capteur (12) détecte une pression ou une force agissant sur l'organe d'extrémité (9).

4. Roulement linéaire selon la revendication 1, dans lequel le capteur est réalisé comme un film de capteur (13).

5. Roulement linéaire selon la revendication 1, dans lequel le capteur est réalisé par un commutateur de capteur (21), qui déclenche un signal de commutation lorsque la résistance au déplacement dépasse une valeur limite.

6. Roulement linéaire selon la revendication 1, dans lequel l'organe d'extrémité (9) est formé par une pièce de tête (18), qui est assemblée par un moyen de fixation, en particulier des vis (19), à un corps de support (8) du chariot de guidage (1), dans lequel le capteur (27) est activement disposé entre le moyen de fixation et la pièce de tête (18).

7. Roulement linéaire selon la revendication 6, dans lequel une tige de vis de la vis (19) est menée à travers une ouverture traversante de la pièce de tête (18), dans lequel une tête de vis (25) de la vis (19) s'appuie sur un épaulement (26) de la pièce de tête (18), et dans lequel le capteur (27) est disposé entre la tête de vis (25) et l'épaulement (26).

8. Roulement linéaire selon la revendication 1, dans lequel l'organe d'extrémité (9) est formé par une pièce de tête (18), qui est assemblée par un moyen de fixation, en particulier des vis (19), à un corps de support (8) du chariot de guidage (1), dans lequel le capteur (23) est activement disposé entre le corps de support (8) et la pièce de tête (18).

9. Roulement linéaire selon la revendication 8, dans lequel une tige de vis de la vis (19) est menée à travers une ouverture traversante de la pièce de tête (18), dans lequel une tête de vis (25) de la vis (19) s' appuie sur un épaulement (26) de la pièce de tête (18), et dans lequel le capteur (23) est disposé entre la pièce de tête (18) et le corps de support (8).

10. Roulement linéaire selon la revendication 1, dans lequel le capteur (12) est intégré dans une pièce de tête (18) formant l'organe d'extrémité (9).

11. Roulement linéaire selon la revendication 10, dans lequel la pièce de tête (18) est fabriquée en plastique, en particulier par un procédé par injection, dans lequel le capteur (12) est noyé dans le plastique.

12. Roulement linéaire selon la revendication 1, dans lequel le signal du capteur (12, 13, 21, 23, 27) est transmis à une unité d'évaluation (22).

13. Roulement linéaire selon la revendication 12, dans lequel il est prévu un câblage entre le capteur (12, 13) et l'unité d'évaluation (22).

14. Roulement linéaire selon la revendication 12, dans lequel le signal du capteur (12) est transmis sans fil, par exemple par radio, à l'unité d'évaluation.

15. Roulement linéaire selon la revendication 12, dans lequel l'unité d'évaluation (22) est intégrée dans la pièce de tête (18).
